**Europäisches Patentamt**

**European Patent Office**

**Office européen des brevets**

(19)

(11) Veröffentlichungsnummer: **0 029 806
B1**

(12) **EUROPÄISCHE PATENTSCHRIFT**

(45) Veröffentlichungstag der Patentschrift:
**14.12.83**

(21) Anmeldenummer: **80810345.1**

(22) Anmeldetag: **10.11.80**

(51) Int. Cl.³: **A 22 C 11/00**, A 22 C 17/00

(54) **Verfahren zur Herstellung hüllenloser Würste.**

(30) Priorität: **21.11.79 CH 10391/79**

(43) Veröffentlichungstag der Anmeldung:
**03.06.81 Patentblatt 81/22**

(45) Bekanntmachung des Hinweises auf die Patenterteilung:
**14.12.83 Patentblatt 83/50**

(84) Benannte Vertragsstaaten:
**AT BE DE FR GB IT LU NL SE**

(56) Entgegenhaltungen:
**FR - A - 2 303 485
FR - A - 2 428 980
GB - A - 1 279 431
US - A - 2 128 735
US - A - 3 009 195
US - A - 3 091 798
US - A - 3 916 483**

(73) Patentinhaber: **C. Hoegger & Cie. AG, Ringstrasse,
CH-9202 Gossau (CH)**

(72) Erfinder: **Geissbühler, Hans, Sonnenbergstrasse 14,
CH-9524 Zuzwil (CH)**

(74) Vertreter: **Schmid, Rudolf et al, c/o ISLER & SCHMID
Patentanwaltsbureau Walchestrasse 23, CH-8006 Zürich
(CH)**

ACTORUM AG

## Verfahren zur Herstellung hüllenloser Würste

Die Erfindung betrifft ein Verfahren zum Herstellen von hüllenlosen Würsten, bei dem rohrförmige Formen durch folgende Arbeitsstationen gefördert werden:

- eine Abfüllstation, wo Wurstbrät in die mindestens an einem Ende offenen Formen gefüllt wird;
- eine Erwärmungsstation, wo das Wurstbrät in der rohrförmigen Form erwärmt wird, wobei das Wurstbrät mindestens an der Oberfläche koaguliert;
- eine Ausformstation, wo die mindestens an der Oberfläche koagulierten Würste aus den rohrförmigen Formen gestossen werden.

Es sind bereits verschiedene Verfahren und Maschinen bekannt zur Herstellung hüllenloser Würste. Bei einem dieser Verfahren, welches in der DE-B-1 226 866 und der US-A-2 623 451 beschrieben ist, wird die Wurstmasse zuerst in Wursthüllen abgefüllt, geräuchert und gekocht und anschliessend die Wursthülle wieder entfernt. Dadurch wird zwar der Nachteil der zum Verspeisen unbeliebten, zähen Wursthülle beseitigt, die weiteren Nachteile, namentlich die Gestehungskosten der Wursthülle, die diskontinuierliche Produktion wegen der beschränkten Länge der Hülle und die Unterbrüche wegen allfälliger «Platzer» der Hülle, bleiben bestehen. Dazu kommt ein zusätzlicher Aufwand an Einrichtung und Zeit für das nachträgliche Entfernen der Wursthülle.

Andere bekannte Verfahren arbeiten ohne solche Hilfswursthüllen. So ist aus der DE-B-1 267 526 bekannt, die Wurstmasse kontinuierlich in oder durch eine Formeinrichtung zu stossen, in welcher unter Wärmeeinwirkung das Brät ganz oder teilweise koaguliert wird. Am Ende der Formeinrichtung wird der Wurststrang durch einen Trennapparat in einzelne Würste aufgeteilt. Aufgrund der erforderlichen Erwärmungszeit muss, um eine wirtschaftliche Kadenz zu erzielen, die Einrichtung zur Herstellung der Würste sehr grosse Dimensionen aufweisen. Zudem ergeben sich beim Durchdrücken der Wurstmasse durch die Formhülse unerwünschte technologische Veränderungen des Brätes. Auch führt das Trennen des bereits koagulierten Wurststranges in einzelne Wurstabschnitte mit geraden Enden zu einem Produkt, das bei den Konsumenten nicht beliebt ist.

In einem weiteren Verfahren, das aus der DE-A-2 839 772 bekannt ist, werden «hüllenlose» Würste hergestellt, indem auf die Wurstmasse ein Bindemittel aufgetragen wird zur Bildung einer künstlichen Haut. Solche Würste gehören jedoch nicht im eigentlichen Sinn zur erfindungsgemässen Gattung.

Schon früh wurden auch Versuche unternommen, das Wurstbrät in Formen zu füllen und bis mindestens zur Koagulation in den Formen zu behalten. Bei einem bekannten Verfahren dieser Art nach der US-A-1 009 953 wird eine hohlzylindrische Form mit Wurstbrät gefüllt und dann an beiden Enden verschlossen. Die Form wird nun während kurzer Zeit in ein Heisswasserbad gelegt, damit die Aussenhaut des Brätes koagulieren kann. Sodann wird die Form geöffnet und die hüllenlose Wurst ausgestossen. Es handelt sich hier um ein Verfahren für die rein manuelle Wurstherstellung, das sehr aufwendig ist und für die Massenproduktion nicht geeignet ist.

Für die industrielle Herstellung hüllenloser Würste in grösseren Stückzahlen mittels Formen eignet sich z.B. die Maschine nach US-A-1 925 157 besser. Diese Maschine weist eine Formvorrichtung auf, die mit einer Mehrzahl fest angeordneter Hülsen versehen ist. Zur Herstellung der Würste wird die Formvorrichtung an einem Ende verschlossen und dann mit einem Füllapparat verbunden. Das Wurstbrät wird unter Druck gleichzeitig in alle Hülsen gestossen, wodurch rohe Würste mit kompakter Masse entstehen. Die Formvorrichtung wird nun vom Füllapparat entkuppelt und geöffnet, damit die vorgeformten Würste ausgestossen und weiterverarbeitet werden können.

Aus der US-A-3 916 482 und der FR-A-2 303 485 ist ein Verfahren zur Herstellung von hüllenlosen Würsten bekannt, bei dem rohrförmige Formen verwendet werden. Diese Formen werden von einem Kettenförderer schrittweise einzeln einer Abfüllstation, wo das Wurstbrät in die an beiden Enden offenen Formen gefüllt wird, einer Erwärmungsstation, wo das Wurstbrät koaguliert wird, und einer Ausformstation zugeführt.

Den bekannten Verfahren und Maschinen zur Herstellung hüllenloser Würste unter Verwendung von Formen, in welche das Wurstbrät eingefüllt wird, haften verschiedene Nachteile an. Da die Formen in speziellen Formvorrichtungen angeordnet sind, müssen die Maschinen der Verarbeitungsstationen diesen Formvorrichtungen angepasst werden, was zu komplizierten und aufwendigen Konstruktionen führt. Die Dimensionen der Formvorrichtungen sind für eine bestimmte Wurstsorte gegeben, und die Grösse der Würste kann in der Regel nicht leicht geändert werden. Auch die Herstellkadenz ist durch die Maschinenkonstellation weitgehend festgelegt. Ferner ist es nicht möglich, die einzelnen Formen rasch auszuwechseln, um andere Wurstsorten herzustellen. Ferner wird bei den bekannten Verfahren ein druckfester Verschluss der Formen in der Kochstufe für erforderlich gehalten, was zu einer entsprechenden Verteuerung der Formen führt. Zusammenfassend kann festgestellt werden, dass die Flexibilität und die Freiheitsgrade der bekannten Verfahren und Maschinen sehr beschränkt sind.

Es ist nun Aufgabe der Erfindung, ausgehend von der US-A-3 916 483 ein Verfahren zur Herstellung hüllenloser Würste zu schaffen, bei dem diese Nachteile vermieden sind. Es soll möglich sein, die Würste rationell und einfach herzustellen, wobei die Flexibilität in der Handhabung der Formen möglichst gross sein soll.

Zur Lösung dieser Aufgabe sieht das erfindungsgemässe Verfahren vor, dass die rohrförmigen Formen entweder lose, oder durch pneumatisch oder hydraulisch betätigbare Hilfsmittel gehalten von der jeweiligen Fördereinrichtung durch die Arbeitsstationen gefördert werden und dass das offene Ende oder die beiden offenen Enden jeder rohrförmigen Form auch in der Erwärmungsstation offengehalten werden, wodurch die Koagulation unter freier Ausbildung der Wurstenden erfolgt.

Die einzelnen Formen lassen sich in verschiedener Weise handhaben, so dass eine grosse Flexibilität im Verfahrensablauf und in der Maschinenkonfiguration gegeben ist. Es ist möglich, die Formen sowohl im geschlossenen Kreislauf kontinuierlich zu führen, als auch für den Pufferbetrieb in Zwischenmagazinen zu stapeln.

Da das offene Ende oder die beiden offenen Enden jeder rohrförmigen Form auch in der Erwärmungsstation offengehalten werden, erfolgt die Koagulation unter freier Ausbildung der Wurstenden.

Nachfolgend werden anhand der Zeichnungen Ausführungsbeispiele der Erfindung näher erläutert. Es zeigen:

Fig. 1 schematisch eine Maschine zur Herstellung hüllenloser Würste unter Verwendung von losen Rohrstücken als Formen,

Fig. 2 einen Schnitt nach der Linie II–II durch die Maschine gemäss Fig. 1 im Bereich der Abfülleinrichtung,

Fig. 3 schematisch das Fixieren eines Rohrstückes,

Fig. 4 einen Schnitt nach der Linie IV–IV durch die Maschine gemäss Fig. 1 im Bereich der Ausformeinrichtung,

Fig. 5 einen Schnitt nach der Linie V–V durch die Maschine gemäss Fig. 1 im Bereich der Reinigungseinrichtung,

Fig. 6 schematisch eine Anlage zur Herstellung hüllenloser Würste,

Fig. 7 zwei verschiedene Rohrstücke, die als Formen Verwendung finden können,

Fig. 8 das Füllen eines Rohrstückes mit Wurstbrät,

Fig. 9 das Erwärmen des gefüllten Rohrstückes,

Fig. 10 das Ausstossen der mindestens teilweise koagulierten Wurst und

Fig. 11 das Rohrstück und die ausgestossene Wurst.

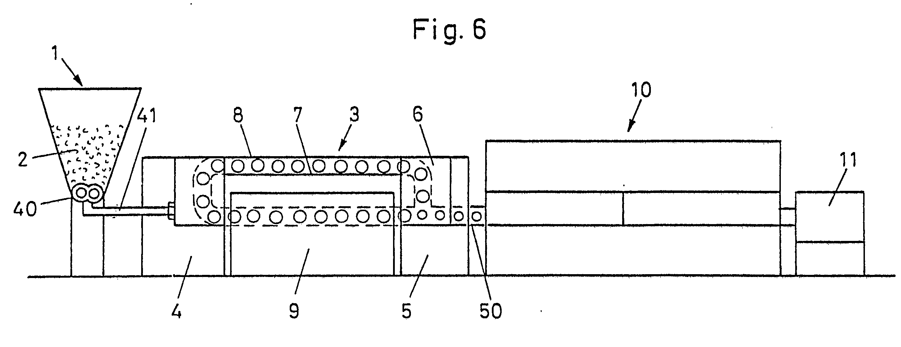

Die in der Fig. 6 gezeigte Anlage zur Herstellung hüllenloser Würste weist eine Abfüllstation 1 auf, welcher die Wurstmasse 2 durch eine nicht näher dargestellte Transporteinrichtung zugeführt wird. Von der Abfüllstation 1 gelangt die Wurstmasse in die eigentliche Wurstherstellmaschine 3, die folgende Komponenten umfasst: eine Abfülleinrichtung 4, eine Ausformeinrichtung 5, eine Reinigungseinrichtung 6 und eine endlose Transporteinrichtung 7 zum Transport der gefüllten Formen 8 durch die Erwärmungszone 9 und zum Rücktransport der leeren Formen von der Reinigungseinrichtung zur Abfüllstation. Der Maschine 3 nachgeschaltet ist eine Räucher-, Koch- und Kühleinrichtung 10, an die eine Verpackungseinrichtung 11 angeschlossen ist.

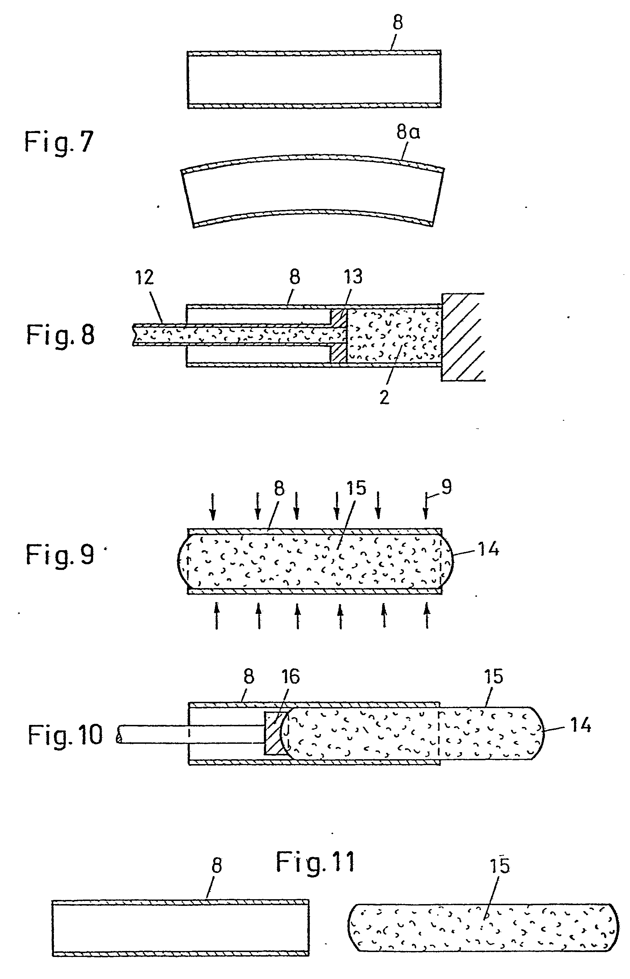

Die Formen sind als gerade oder gebogene Rohrstücke 8, 8a ausgebildet, wie in Fig. 7 dargestellt ist. Diese Rohrstücke sind vorteilhafterweise aus festem Material hergestellt. Die Materialwahl richtet sich nach der Wärmequelle, in der die Rohrstücke mit dem Fleischgemisch erwärmt werden. Durchlaufen die Rohrstücke z.B. einen Mikrowellentunnel, so müssen sie aus Glas oder Kunststoff sein, währenddem sie z.B. beim Erwärmen durch Wärmeleitung vorteilhafterweise aus Metall sein sollten. Die Rohrstücke sind beidseitig offen und benötigen weder Verschlüsse, Kappen, Deckel od.dgl. Sie werden einzeln und lose gehandhabt, was eine grosse Flexibilität bei der Maschinenwahl erlaubt. So ist es auch ohne weiteres möglich, bei Bedarf die geraden Rohrstücke 8 durch die gebogenen Rohrstücke 8a zu ersetzen.

Beim Abfüllen der Rohrstücke 8 wird das Brät 2 nicht einfach von vorne in das Rohrstück hineingestopft wie bei anderen bekannten Verfahren, sondern es wird mit einem speziellen Füllrohr 12 mit Kolben 13, beim entfernteren Ende beginnend, in das Rohrstück hineingebracht.

Nach dem Füllen der Rohrstücke 8 mit dem Fleischgemisch 2 werden sie mit dem Transportband 7 zur Wärmequelle 9 geführt und dort ohne Verschlüsse der Wärme ausgesetzt, wodurch das Brät mindestens teilweise koaguliert. Infolge des Erwärmens, vor allem der im Fleischgemisch enthaltenen gasförmigen Bestandteile, dehnt es sich gegen die Enden hin aus. Wegen der Haftreibung der Brätoberfläche an der Innenwandung der Rohrstücke und wegen der bereits erfolgten teilweisen Koagulation an der Oberfläche entsteht eine natürliche Bombierung der Stirnflächen 14 der entsprechenden Würste. Diese Würste haben somit eine natürliche Form und entsprechen den Vorstellungen der Konsumenten.

Die Erwärmung kann so gross sein, dass der ganze Inhalt des Rohrstücks koaguliert. Um jedoch eine hohe Herstellfrequenz erzielen zu können und die Anzahl Rohrstücke auf ein Minimum beschränken zu können, ist es zweckmässig, die Erwärmungszeit so kurz wie möglich zu halten. Es genügt nämlich, wenn nur die äusserste Schicht des Fleischgemisches koaguliert, weil dann die Form der Wurst bereits gegeben ist. So kann z.B. nach Erwärmung im Wasserbad bei einer Temperatur von 80 °C das zu einer Wurst geformte Fleischgemisch bereits nach 30 Sekunden aus dem Rohrstück ausgestossen werden, ohne Gefahr zu laufen, dass es die Form im weiteren Behandlungsprozess wieder verliert.

Das Ausstossen der Wurst 15 aus dem Rohrstück 8 kann mechanisch oder durch Gasdruck od.dgl. erfolgen. Die ausgestossenen Würste 15 werden weitertransportiert, z.B. zum Räuchern, Kochen, Kühlen und Verpacken, währenddem die Rohrstücke aufbereitet und zum erneuten Abfüllen rücktransportiert werden.

Es ist zweckmässig, die Rohrstücke 8 innen mit einer Schutzschicht zu versehen, um das Anhaften des Wurstbrätes vollständig zu vermeiden. Die Rohrstücke können vor dem Abfüllen mit einer entsprechenden Flüssigkeit benetzt werden, oder sie können auch mit einem Anti-Haftbelag versehen sein. Neben runden Rohrstücken könnten auch Rohre mit dreieckigen, rechteckigen, ovalen oder anderen Querschnitten vorgesehen sein.

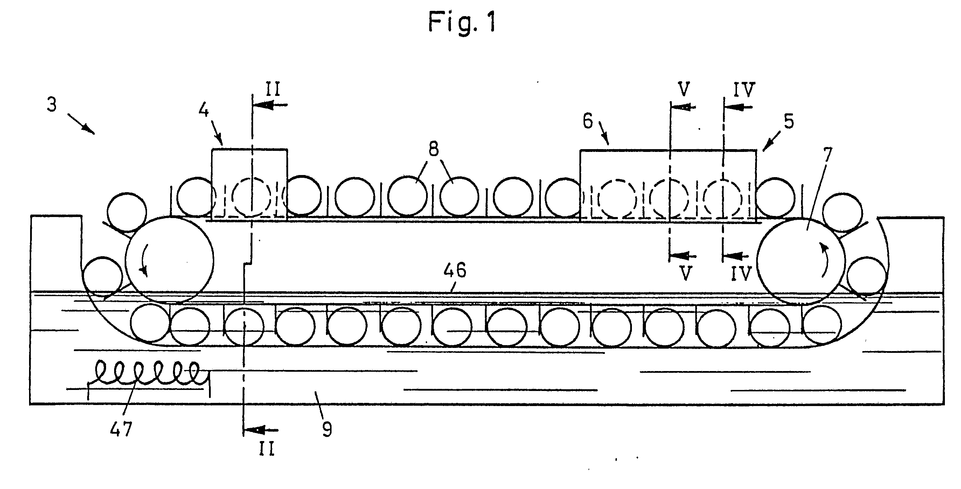

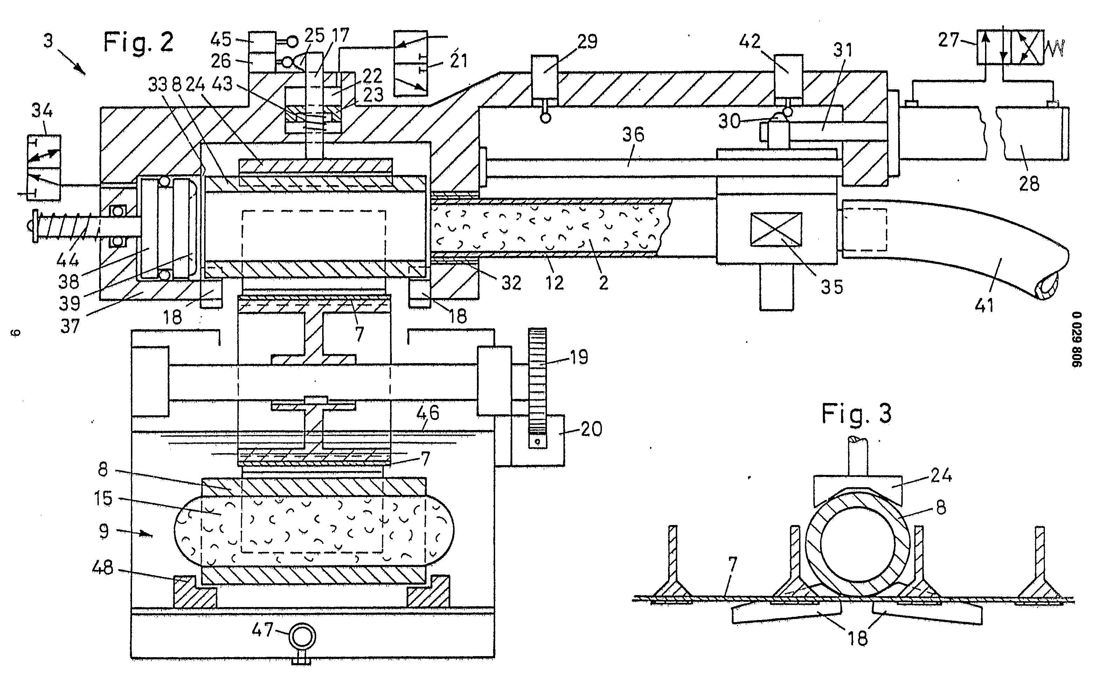

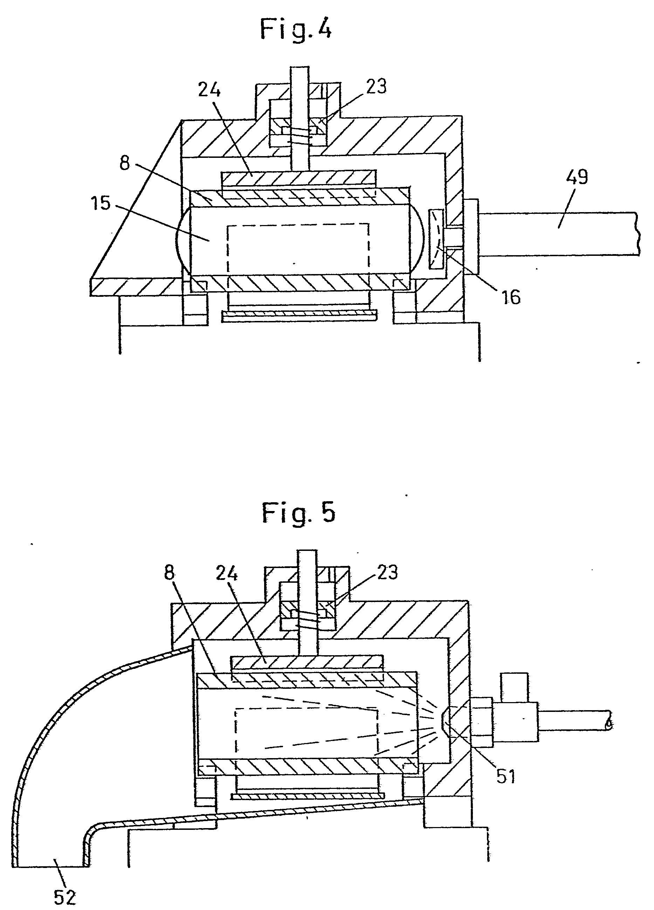

Anhand der Fig. 1–5 wird nun die eigentliche Wurstherstellmaschine 3 näher beschrieben. Die Rohrstücke 8 werden mit dem Förderband 7 über die Fixierrampe 18 der Abfülleinrichtung 4 zugeführt. Der Antrieb erfolgt mittels eines Klinkenrades 19 und eines auf letzteres einwirkenden Pressluftzylinders 20. Nach erfolgter Zuführung wird durch einen am Hubende des Pressluftzylinders angebrachten Endschalter, der nicht näher dargestellt ist, das Magnetventil 21 angesteuert, so dass der Zylinderraum 22 oberhalb des Niederhalters 24 mit Pressluft versorgt wird, und der Kolben 23 den Niederhalter 24 auf das Rohrstück 8 presst und dieses fixiert. Die Kolbenstange 17 des Niederhaltekolbens 23 trägt am Ende einen Nocken 25, der auf einen Endschalter 26 einwirkt. Letzterer betätigt das Ventil 27 derart, dass der Kolben des Zylinders 28 für die Brätzuführung das Füllrohr 12 in das Rohrstück 8 hineinzieht. Sobald der Kolben ansteht, wird der Schalter 29 durch den auf der Kolbenstange 31 sitzenden Nocken 30 betätigt.

Die Luft im Rohrstück 8, die durch das mit einer Dichtung 32 versehene Füllrohr 12 verdrängt wird, entweicht durch den Spalt 33 am gegenüberliegenden Ende des Rohrstückes 8. Der Schalter 29 steuert die Ventile 27 und 34 und den Schieber 35 an. Letzterer ist auf einer Führungsstange 36 gelagert und wird durch die Kolbenstange 31 bewegt.

Die durch das Impulsventil 34 dem Steuerzylinder 37 zugeführte Pressluft drückt den Verschlusskolben 38 mit der Dichtfläche 39 auf das Rohrstück 8 und schliesst den Luftspalt 33 dicht ab. Nun öffnet der Schieber 35 die mit der Brätförderpumpe 40 verbundene flexible Leitung 41. Da gleichzeitig mit dem Schalter 29 das Ventil 27 angesteuert wird, zieht die Kolbenstange 31 vom Zylinder 28 das Füllrohr 12 zurück, und die Brätmasse 2 fliesst durch den Überdruck in das Rohrstück 8. Die Brätförderpumpe 40 hält dabei die Brätmasse 2 auf einem konstanten Druck. Durch Betätigung des Schalters 42 beim Rückhub wird der Schieber 35 geschlossen, so dass die Brätzufuhr unterbunden ist. Gleichzeitig werden die Ventile 21 und 34 umgestellt. Dadurch werden die Kolben 23 und 38 durch die Federn 43 bzw. 44 zurückgestellt.

Der beim Zurückstellen betätigte Schalter 45 setzt über ein Ventil den Zylinder 20 in Betrieb, der das Förderband 7 um ein Rohrstück 8 vorwärtsbewegt und einen neuen Takt einleitet. Die gefüllten Rohrstücke 8 tauchen mit dem Förderband 7 in eine Flüssigkeit 46, die durch die Heizung 47 erwärmt und mit einer Thermostatregelung auf konstanter Temperatur gehalten wird. Mittels der Führung 48 werden die Rohrstücke auf dem Transportband 7 in der Spur gehalten.

Nach dem Durchlauf durchs Bad werden die Rohrstücke zur Ausformeinrichtung 5 geführt, wo die koagulierte Wurst 15 durch den Zylinder 49, der synchron mit dem Zylinder 28 arbeitet, ausgestossen wird. Zum Ausstossen dient der Stössel 16.

Die ausgestossene Wurst 15 gelangt mit einem weiteren Förderband 50 in die Rauchkammer 10 zur weiteren Behandlung. Die Fixierung der Rohrstücke bei den folgenden Verarbeitungsstationen erfolgt analog wie in der Abfüllstation und über eine identische Steuerung.

Das leere Rohr wird nun in der Reinigungseinrichtung 6 mittels der Düse 51 mit heissem Wasser ausgespült. Das Abwasser fliesst über den Kanal 52 weg. In einem weiteren Schritt kann das Restwasser mit einer analogen Düse herausgeblasen werden. Die Rohrstücke sind nun für ein erneutes Abfüllen bereit.

Das vorbeschriebene Verfahren zur Herstellung hüllenloser Würste und die Einrichtung zum Ausführen dieses Verfahrens weisen viele Vorteile auf:

— Bei den einzelnen Rohrstücken handelt es sich um sehr einfache Teile, die rationell und billig hergestellt werden können.
— Diese Rohrstücke können bei allen Maschinen eingesetzt werden, die zur Handhabung loser Rohrstücke konzipiert sind.
— Das Auswechseln einzelner oder aller Rohrstücke ist jederzeit problemlos möglich.
— Die Rohrstücke sind leicht zu handhaben, z.B. beim Beschichten mit einem Anti-Haftbelag, speziell beim Einbrennen des Belages, sowohl erstmalig wie auch bei der Schichterneuerung.
— Durch die Verwendung einzelner, loser Rohrstücke ist dem Konstrukteur eine grosse Freiheit beim Anordnen der Einzelkomponenten der Maschine gegeben. Diese Komponenten können im Baukastensystem konzipiert sein und auf verschiedene Weisen miteinander kombiniert werden.
— Die Verwendung von einzelnen Rohrstücken eignet sich insbesondere für Hochleistungsmaschinen mit hoher Verarbeitungskadenz. Ähnlich wie bei Flaschenabfüllmaschinen, die 50 000 Flaschen pro Stunde und mehr einzeln verarbeiten, können auch die Rohrstücke einzeln in grossen Serien gehandhabt werden.
— Neben dem kontinuierlichen Betrieb im Kreislauf ist auch ein Pufferbetrieb möglich. So kann z.B. vor der Abfüllstation ein Magazin zum Stapeln der Rohrstücke angebracht werden. Bei Arbeitsschluss oder zum Auswechseln der Rohrstücke können auf diese Art sämtliche Rohrstücke im Magazin untergebracht werden. Das «Pufferprinzip» erlaubt das Abstellen einzelner Verarbeitungsstationen, ohne dass die ganze Anlage gestoppt werden muss.

Bei einer weiteren, nicht näher dargestellten Anlage für die Herstellung hüllenloser Würste in grossen Serien kann als Abfüllstation eine kontinuierlich rotierende Abfülltrommel vorgesehen sein. Die Rohrstücke sind gleichmässig über den Umfang verteilt und parallel zur Trommelachse pneumatisch oder hydraulisch gehalten.

Nach dem Füllen der Rohrstücke werden diese einer Transporteinrichtung übergeben, die sie zur Erwärmung durch einen Mikrowellenofen führt. Am anderen Ende der Transporteinrichtung befindet sich eine Ausform- und Reinigungstrommel, die die gefüllten Rohrstücke abnimmt. Nach dem Ausstossen der Würste mittels Stössel werden die gereinigten Rohrstücke wieder zur Abfülltrommel zurücktransportiert.

Bei einer weiteren Anlage, eine Kombination der beiden vorhergehenden, sind mehrere Einheiten pro Operation (z.B. Abfüllrohre) auf einem Schlitten montiert, der die kontinuierlich angetriebene Rohrstück-Transporteinrichtung während dem Ausführen der Operation (z.B. Rohrstücke abfüllen) begleitet und nach beendigter Aufgabe (Füllen der Rohrstücke) in die Ausgangslage zurückkehrt. Dies ergibt trotz schrittweisem Operieren eine kontinuierliche, leistungsstarke Produktion.

**Patentansprüche**

1. Verfahren zum Herstellen von hüllenlosen Würsten, bei dem rohrförmige Formen (8) durch folgende Arbeitsstationen gefördert werden:
- eine Abfüllstation (4), wo Wurstbrät in die mindestens an einem Ende offenen Formen gefüllt wird;
- eine Erwärmungsstation (46, 47), wo das Wurstbrät in der rohrförmigen Form erwärmt wird, wobei das Wurstbrät mindestens an der Oberfläche koaguliert;
- eine Ausformstation (5), wo die mindestens an der Oberfläche koagulierten Würste aus den rohrförmigen Formen gestossen werden, dadurch gekennzeichnet, dass die rohrförmigen Formen (8) entweder lose ohne feste Verbindung oder durch pneumatisch oder hydraulisch betätigbare Hilfsmittel gehalten von der jeweiligen Fördereinrichtung (7) durch die Arbeitsstationen gefördert werden und dass das offene Ende oder die beiden offenen Enden jeder rohrförmigen Form (8) auch in der Erwärmungsstation (46, 47) offengehalten werden, wodurch die Koagulation unter freier Ausbildung der Wurstenden erfolgt.

2. Verfahren nach Anspruch 1, dadurch gekennzeichnet, dass die Formen (8) mittels der Fördereinrichtung (7) zwischen der Abfüllstation (4) und der Ausformstation (5) kontinuierlich oder diskontinuierlich im Kreislauf geführt werden.

3. Verfahren nach Anspruch 1, dadurch gekennzeichnet, dass die Formen (8) nach der Ausformung der Würste einer Reinigungsstation (6) zugeführt werden und von da an die Abfüllstation (4) zurücktransportiert werden.

4. Verfahren nach Anspruch 1, dadurch gekennzeichnet, dass die Formen (8) während des Herstellungsprozesses in mindestens einem Magazin zwischengelagert werden und dann einzeln wieder dem Magazin entnommen werden.

5. Verfahren nach Anspruch 1, dadurch gekennzeichnet, dass die Formen (8) aus Glas, Kunststoff oder Metall bestehen.

6. Verfahren nach Anspruch 1, dadurch gekennzeichnet, dass die Formen (8) gerade oder gebogen sind.

7. Verfahren nach Anspruch 1, dadurch gekennzeichnet, dass zum Füllen der Formen (8) mit Wurstbrät ein Füllrohr (12) in jede Form hineingeschoben oder die Form über das Füllrohr geschoben wird und dass beim Herausziehen des Füllrohres bzw. der Form das Wurstbrät in die letztere hineingelangt.

**Claims**

1. A method of producing uncased sausages, in which tubular moulds (8) are conveyed through the following working stations:
- a filling station (4) where sausage-meat is poured into the moulds, which are open at at least one end;
- a heating station (46, 47) where the sausage-meat is heated in the tubular mould, the meat coagulating at least on the surface, and
- a mould-release station (5) where the sausages, after coagulating at least at the surface, are ejected from the tubular moulds, characterised in that the tubular moulds (8) are conveyed, either loosely or retained by pneumatic or hydraulic means, by the conveyor (7) through the working stations, and the or both open ends of each tubular mould (8) remains or remain held open in the heating station (46, 47), so that coagulation proceeds with free formation of the sausage ends.

2. A method according to claim 1, characterised in that the conveyor (7) circulates the moulds (8) continuously or intermittently between the filling station (4) and the mould-release station (5).

3. A method according to claim 2, characterised in that after release of the sausages the moulds (8) are supplied to a cleaning station (6) and thence to the filling station (4).

4. A method according to claim 1, characterised in that during the production process the moulds (8) are temporarily stored in at least one magazine, from which they are removed individually.

5. A method according to claim 1, characterised in that the moulds (8) are made of glass or plastics or metal.

6. A method according to claim 1, characterised in that the moulds (8) are straight or curved.

7. A method according to claim 1, characterised in that to fill the moulds (8) with sausage-meat a tube (12) is inserted into each mould or the mould is pushed over the tube, and when the tube or the mould is withdrawn, the sausage-meat enters the mould.

**Revendications**

1. Procédé pour fabriquer des saucisses sans enveloppes, dans lequel des moules tubulaires (8) sont acheminés par les postes de travail suivants:

– un poste de remplissage (4), dans lequel la chair à saucisses est introduite dans les moules ouverts au moins à une extrémité;

– un poste de chauffage (46, 47), dans lequel la chair à saucisses est chauffée dans le moule tubulaire, cette chair à saucisses se coagulant au moins à sa surface;

– un poste de démoulage (5), dans lequel les saucisses au moins coagulées à leur surface sont éjectées des moules tubulaires, procédé caractérisé par le fait que les moules tubulaires (8) sont acheminés à travers les postes de travail soit avec jeu sans aucune liaison rigide, soit à l'aide de moyens auxiliaires actionnables pneumatiquement ou hydrauliquement, en étant maintenus par le dispositif d'acheminement considéré (7); et par le fait que l'extrémité ouverte ou les deux extrémités ouvertes de chaque moule tubulaire (8) sont également maintenues ouvertes dans le poste de chauffage (46, 47), ce qui fait que la coagulation a lieu avec une configuration libre des extrémités des saucisses.

2. Procédé selon la revendication 1, caractérisé par le fait que les moules (8) sont guidés continûment ou discontinûment dans un circuit fermé, à l'aide du dispositif d'acheminement (7), entre le poste de remplissage (4) et le poste de démoulage (5).

3. Procédé selon la revendication 1, caractérisé par le fait que, après le démoulage des saucisses, les moules (8) sont dirigés vers un poste de nettoyage (6) et de là, sont ramenés au poste de remplissage (4).

4. Procédé selon la revendication 1, caractérisé par le fait que, lors du processus de fabrication, les moules (8) sont entreposés temporairement dans au moins un magasin, pour être ensuite de nouveau prélevés individuellement de ce magasin.

5. Procédé selon la revendication 1, caractérisé par le fait que les moules (8) consistent en du verre, de la matière plastique ou du métal.

6. Procédé selon la revendication 1, caractérisé par le fait que les moules (8) sont rectilignes ou curvilignes.

7. Procédé selon la revendication 1, caractérisé par le fait que, en vue d'emplir les moules (8) de chair à saucisses, un tube de remplissage (12) est inséré dans chaque moule ou le moule est enfilé sur ce tube de remplissage; et par le fait que, lors de l'extraction du tube de remplissage ou du moule, la chair à saucisses pénètre à l'intérieur de ce dernier.

Fig. 1

0 029 806

Fig. 2

Fig. 3

# Fig. 4

# Fig. 5

# Fig. 6

Fig. 7

Fig. 8

Fig. 9

Fig. 10

Fig. 11